# EUROPÄISCHE PATENTSCHRIFT

(11) **EP 3 168 146 B1**
(45) Veröffentlichungstag und Bekanntmachung des Hinweises auf die Patenterteilung: **05.06.2019**
(21) Anmeldenummer: 16197094.2
(22) Anmeldetag: 03.11.2016
(51) Int. Cl.: B64C 27/51

(54) **ROTORBLATTKOPPLUNGSVORRICHTUNG EINES ROTORKOPFS FÜR EINEN DREHFLÜGLER**
ROTOR BLADE COUPLING DEVICE OF A ROTOR HEAD FOR A ROTORCRAFT
DISPOSITIF DE COUPLAGE DE PALE DE ROTOR D'UN MOYEU DE ROTOR POUR UN GIRAVION

(30) Priorität: 11.11.2015 CH 16392015; 11.10.2016 CH 13602016
(43) Veröffentlichungstag der Anmeldung: 17.05.2017
(73) Patentinhaber: kopter group ag, 8753 Mollis (CH)
(72) Erfinder: Stucki, Martin, 8330 Pfäffikon (CH); Caminada, Mario, 8645 Jona (CH); Moser, Patrick Reginald, 8810 Horgen (CH); Leibbrandt, Riekert, 0186 Pretoria (ZA)
(74) Vertreter: Schneider Feldmann AG Patent- und Markenanwälte

(56) Entgegenhaltungen:
- EP-A1- 0 080 920
- CN-B- 102 501 970
- FR-A1- 2 929 675
- US-A- 3 842 945
- US-A- 4 915 585

## Beschreibung

### Technisches Gebiet

Die vorliegende Erfindung beschreibt eine Rotorblattkopplungsvorrichtung eines Rotorkopfs für einen Drehflügler wie beispielsweise einen Hubschrauber oder einen Helikopter gemäss dem Oberbegriff des ersten Patentanspruchs.

Die Rotorblattkopplungsvorrichtung gemäss der vorliegenden Erfindung beschäftigt sich insbesondere mit den bei der Rotation der Rotorblätter auftretenden Schlag- und Schwenkbewegungen.

Üblicherweise umfassen Rotorblattkopplungsvorrichtungen ein vertikal zur Rotorebene stehendes Drehgelenk mit einstellbarem Winkelverstellwiderstand zwischen einzelnen Rotorblatthalterungen und einem jeweilig zugehörigen, auftriebserzeugenden Rotorblatt. In der horizontalen Rotorebene tritt eine in Abhängigkeit der Stellung des jeweiligen Rotorblatts auftretende Schwenkbewegung auf. Diese Schwenkbewegung ist rückwärts, d.h. entgegen der Umlaufrichtung ("lag") eines Rotorblatts, beziehungsweise vorwärts, d.h. in Umlaufrichtung ("lead") eines Rotorblatts gerichtet. Üblicherweise ist der Winkelverstellwiderstand anhand hydraulischer Dämpfungselemente einstellbar, welche solche so genannten lead-lag-Bewegungen verlangsamen beziehungsweise dämpfen. Hydraulische Dämpfungselemente sind besonders umständlich hinsichtlich Montage, Inspektion und Wartung. Solche lead-lag-Bewegungen werden hauptsächlich durch Corioliskräfte und Luftwiderstand verursacht, wobei auch Fliehkräfte und Trägheitskräfte Einfluss auf die lead-lag-Bewegungen haben.

### Stand der Technik

Bekannt sind beispielsweise aus US 2008/0159862 A1 Rotorblattkopplungsvorrichtungen, wobei eine Vielzahl von (in Umlaufrichtung der rotierenden Rotorblätter federnden) Dämpfungselementen als Verbindungselemente zwischen jeweils zwei benachbarten Rotorblättern angeordnet sind und die lead-lag-Bewegungen dämpfen.

Solche aus US 2008/0159862 A1 bekannten Dämpfungselemente zwischen jeweils zwei benachbarten Rotorblättern werden üblicherweise auch als "interblade"-Dämpfer bezeichnet. Die aus US 2008/0159862 A1 bekannte Rotorblattkopplungsvorrichtung mit Dämpfungselementen zwischen jeweils zwei benachbarten Rotorblättern entspricht einem komplexen Aufbau. So ist im Übergangsbereich zwischen den einzelnen Dämpfungselementen und Rotorblatthalterungen eine zusätzliche Anordnung von jeweils zwei Gelenken und verbindenden Laschen notwendig, welche einem besonders grossen Wartungsaufwand bedürfen. Im Weiteren hat sich gezeigt, dass solche zwei von der blade-pitch-Achse beabstandete Gelenke negative, dynamische Effekte erzeugen können.

Nachfolgend werden weitere aus dem Stand der Technik bekannte Rotorblattkopplungsvorrichtungen benannt, welche Verbindungselemente im Querungsbereich der Rotorblatthalterungen aufweisen sowie Dämpfungsmittel, um die lead-lag-Bewegungen dämpfen.

Aus US 2010/0215496 A1 ist eine Rotorblattkopplungsvorrichtung bekannt, welche einen ähnlichen Aufbau wie die Rotorblattkopplungsvorrichtung aus US 2008/0159862 A1 aufweist.

Die aus US 2010/0215496 A1 bekannte Rotorblattkopplungvorrichtung umfasst als eine im Rotorblatthalterung querenden Bereich angeordnete eine Dämpfungsvorrichtung, wobei diese Dämpfungsvorrichtung ein elastomeres Bauteil umfasst. Die Dämpfung basiert auf einer elastischen Verdrehung des elastomeren Bauteils. Zwischen den Dämpfungsvorrichtungen sind als Verbindungselemente zwischen den Rotorblättern vorzugsweise aus steifem Material ausgebildete Stangen angeordnet.

Die aus US 2010/0215496 A1 bekannte Rotorblattkopplungsvorrichtung ist aufwendig in der Montage und Wartung.

Aus US 4,915,585 ist eine weitere Rotorblattkopplungsvorrichtung bekannt mit einer Vielzahl von an jeweils einer Rotorblatthalterung angeordneten Rotorblättern sowie Dämpfungsmitteln zur Dämpfung von lead-lag-Bewegungen. Im Weiteren offenbart US 4,915,585 Dämpfungsvorrichtungen als Verbindungsmittel zwischen benachbarten Rotorblatthalterungen, so genannte "Interblade"-Dämpfer. Zudem umfasst die Rotorblattkopplungsvorrichtung aus US 4,915,585 gemäss einer bevorzugten Variante jeweils die Rotorblatthalterung querende, V-förmige und starr ausgebildete Hebelelemente, wobei ein Hebelarm des Hebelelements gelenkig und der andere Hebelarm starr mit einer Dämpfungsvorrichtung in Verbindung steht.

### Darstellung der Erfindung

Die vorliegende Erfindung hat sich zur Aufgabe gestellt, eine gegenüber der aus dem Stand der Technik bekannten Rotorblattkopplungsvorrichtungen einfachere, gelenkarme Rotorblattkopplungsvorrichtung mit einem vereinfachten Aufbau bereitzustellen, welche eine verbesserte Dämpfung gegenüber lead-lag-Bewegungen gewährleistet.

Diese Aufgaben werden durch eine Rotorblattkopplungsvorrichtung mit den Merkmalen des Patentanspruches 1 gelöst.

Erfindungsgemäss bildet ein jeweils eine Rotorblatthalterung querendes plattenförmiges Transferelement einen Bestandteil zweier benachbarter Dämpfungsvorrichtungen und steht in direkter Wirkverbindung mit den zwei benachbarten Dämpfungsvorrichtungen.

Die Gesamtheit der querenden, plattenförmigen Transferelemente sowie Dämpfungsvorrichtungen bilden einen geteilten Ring beziehungsweise eine Ringanordnung. Der geteilte Ring bildet im mit dem Rotorkopf gekoppelten Zustand der erfindungsgemässen Rotorblattkopplungsvorrichtung keine direkte mechanische und starre Wirkverbindung zwischen dem geteilten Ring und Rotormast, so dass der geteilte Ring sozusagen vollständig kardanisch gelagert ist. Die Ringanordnung aus der Gesamtheit der querenden, plattenförmigen Transferelemente sowie Dämpfungsvorrichtungen kann im Wesentlichen kreisförmig oder vieleckig, insbesondere fünfeckig, ausgebildet sein.

Mit anderen Worten kann der geteilte Ring beziehungsweise die Ringanordnung der erfindungsgemässen Rotorblattkopplungsvorrichtung als eine Ringanordnung mit flexiblen Abschnitten aufgefasst werden, wobei die flexiblen Abschnitte durch die Dämpfungsvorrichtungen gebildet werden.

Es wurde vorteilhaft gefunden, dass durch eine derartige Ringanordnung der erfindungsgemässen Rotorblattkopplungsvorrichtung hinsichtlich des so genannten "regressive mode" betreffend Bodenresonanz eine besonders gute Dämpfung erzielt wird.

Im Weiteren wurde überraschend gefunden, dass bei der Ringanordnung der erfindungsgemässen Rotorblattkopplungsvorrichtung die bei der Rotation der Rotorblätter auftretenden, kollektiven und zyklischen Schlagbewegungen einen verringerten Einfluss auf die Dämpfungsvorrichtungen haben im Vergleich mit den lead-lag-Dämpfungssystemen bekannter Rotorblattkopplungsvorrichtungen. In diesem Zusammenhang kann zudem als vorteilhaft erwähnt werden, dass bei der erfindungsgemässen Rotorblattkopplungsvorrichtung solche Schlagbewegungen bereits aerodynamisch in einem hohen Masse gedämpft ist, wodurch eine zusätzliche, unerwünschte Belastung auf die Komponenten der Dämpfungsvorrichtungen der erfindungsgemässen Rotorblattkopplungsvorrichtung verringert ist und dadurch die Lebensdauer der Komponenten der Dämpfungsvorrichtungen erhöht wird.

Gemäss einer bevorzugten Weiterbildung ist das die Rotorblatthalterung querende, plattenförmige Transferelement winklig oder kreissegmentförmig mit zwei Armen ausgestaltet, wobei zwei Arme je zweier benachbarter Transferelemente mittelbar über die als Plattendämpfer ausgebildete Dämpfungsvorrichtung miteinander verbunden sind. Eine genügend steife Ausbildung der die Rotorblatthalterung querenden Transferelemente ist durch die Materialwahl und / oder Geometriewahl, insbesondere die Dicke des Transferelements, erzielbar. Besonders bevorzugt werden als Materialien zur Erzielung der erforderlichen Steifigkeit der Transferelemente im Flugzeugbau übliche Materialien wie Aluminium, Stahl, Titan oder deren Legierungen, oder Faserverbundwerkstoffe, z.B. Carbon und / oder Glasfaser, verwendet.

Bevorzugt sind die querenden, plattenförmigen Transferelemente einstückig ausgebildet, es ist jedoch auch denkbar, dass die querenden, plattenförmigen Transferelemente mehrstückig ausgebildet sind. Im Sinne der vorliegenden Erfindung handelt es sich in diesem Zusammenhang sowohl bei einem einstückigen, plattenförmigen Transferelement wie auch einem mehrteilig ausgestalteten, plattenförmigen Transferelement um ein strukturell starr ausgebildetes Element ohne gelenkige Abschnitte.

Indem erfindungsgemäss die die Blatthalterungen querenden Transferelemente ein integrierter Bestandteil zweier benachbarter Dämpfungsvorrichtungen bildet und dadurch in direkter Wirkverbindung mit den zwei benachbarten Dämpfungsvorrichtungen steht, kann eine verbesserte, direkte Verteilung der auf jeweils ein Rotorblatt wirkenden Kräfte auf zwei Dämpfungsvorrichtungen erfolgen, woraus eine verbesserte Dämpfung der lead-lag-Bewegungen resultiert. Unter Wirkverbindung wird gemäss der vorliegenden Erfindung verstanden, dass das querende Transferelement derart in die Dämpfungsvorrichtung integriert ist, dass zwischen dem querenden plattenförmigen Transferelement und den anderen Komponenten der Dämpfungsvorrichtung eine Relativbewegung stattfinden kann. Im Sinne der vorliegenden Erfindung wird unter direkten Wirkverbindung zwischen plattenförmigem Transferelement und Dämpfungsvorrichtung verstanden, dass zwischen Transferelement und Dämpfungsvorrichtung keine zusätzlichen Gelenke angeordnet sind im Gegensatz zur Rotorblattkopplungsvorrichtung aus US 4,915,585.

Im Sinne der vorliegenden Erfindung kann die erfindungsgemässe Rotorblattkopplungsvorrichtung bevorzugt mit dem Rotormast eines Hauptrotors gekoppelt werden. Alternativ ist es jedoch auch denkbar, dass die erfindungsgemässe Rotorblattkopplungsvorrichtung am Heckrotor anbringbar ist. Im Weiteren kann die Anwendung der erfindungsgemässen Rotorblattkopplungsvorrichtung bemannte und unbemannte Drehflügler betreffen.

Vorzugsweise umfasst die erfindungsgemässe Rotorblattkopplungsvorrichtung jeweils ein elastomeres, sphärisches Lagerelement für eine Rotorblatthalterung, um Schwenkbewegungen und Schlagbewegungen zu erlauben. Besonders bevorzugt sind die sphärischen Lagerelemente derart ausgestaltet und in der Rotorblattkopplungsvorrichtung angeordnet, dass die mindestens drei Rotorblatthalterungen sich bei der Rotation in die Umlaufrichtung flexibel verhalten und die mindestens drei Rotorblatthalterungen relativ zum Rotorkopfzentralstück bezüglich einer Rotorlängsachse um eine im Wesentlichen vertikal zur Rotorebene stehende Schwenkachse schwenkbewegbar sind und dadurch "lead-lag"-Bewegungen erlauben. Im Weiteren ist das elastomere, sphärische Lagerelement derart ausgestaltet, dass sich das elastomere, sphärische Lagerelement in Richtung der Schlagbewegungen flexibel verhält. Zudem sind die elastomeren, sphärischen Lagerelement derart ausgestaltet, um sich gegenüber "blade-pitch"-Rotationen flexibel zu verhalten. Derartig ausgestaltete Lagerelemente sind in Fachkreisen auch als sogenannte "laminated spherical thrust bearing" bekannt.

Vorzugsweise weist das Rotorkopfzentralstück mindestens zwei Durchbrüche auf, wobei jeweils in einem Durchbruch ein elastomeres, sphärisches Lagerelement angeordnet ist. Alternativ ist es denkbar, dass anstelle eines elastomeren, sphärischen Lagerelements an dieser Stelle ein mechanisches Lagerelement angeordnet ist.

Solche elastomere, sphärische Lagerelemente bewirken vorteilhaft eine Übertragung der Zentrifugallast von jeweils einer Rotorblatthalterung zum Rotormast. Insbesondere übertragen solche elastomere, sphärische Lagerelemente die Zentrifugalkraft (unter Druck) und lassen Schlag-, Schwenk- und so genannte "blade-pitch"-Rotationsbewegungen zu. Im Sinne der vorliegenden Erfindung wird unter dem Begriff "elastomer" verstanden, dass als Material vorzugsweise Gummi verwendet wird und dass dadurch die sphärischen Lager sich bei Zug- und Druckbelastungen elastisch verformen, sich aber danach wieder in ihre ursprüngliche, unverformte Gestalt zurückfinden.

Weitere vorteilhafte Ausgestaltungsformen sind in den abhängigen Patentansprüchen angegeben.

Vorzugsweise sind die querenden, plattenförmigen Transferelemente zu den Blatthalterungen kippbar gelagert, beispielsweise mittels eines Gleitlagers, insbesondere Kugelgelenklagers mit einer Gleitschicht, und / oder mittels eines Elastomerlagers, insbesondere Kugelgelenklagers mit einer oder mehreren Elastomerschichten. Ein solches Kipplager lässt ungehindert Rotationsbewegungen zwischen Rotorblatthalterungen und Transferelementen zu.

Bevorzugt ist die Dämpfungsvorrichtung als Plattendämpfer ausgebildet, wobei besonders bevorzugt der Plattendämpfer mindestens zwei voneinander beabstandete, jeweils benachbarte Rotorblatthalterungen querende, plattenförmigen Transferelemente umfasst und zumindest abschnittsweise aufnimmt. Mit anderen Worten sind als Dämpfungsvorrichtungen beliebige Ausgestaltungen von Plattendämpfern oder beliebige andere "interblade"-Dämpfer wie beispielsweise hydraulische Dämpfer im Rahmen der vorliegenden Erfindung denkbar, welche es erlauben, die querenden, plattenförmigen Transferelemente aufzunehmen.

Mit anderen Worten erfolgt in der als Plattendämpfer ausgebildeten Dämpfungsvorrichtung die Dämpfung durch eine Scherung von Elastomerplatten als aktive Einheiten des Plattendämpfers. Die Elastomerplatten verhalten sich vorzugsweise viskoelastisch, d.h. elastisch zur Energiespeicherung und viskos zur Energieaufnahme oder Energieumwandlung (Dämpfung).

Bevorzugt handelt es sich bei den Elastomerplatten des Plattendämpfers um Gummielemente enthaltend beispielsweise Naturgummi, Silikonkautschuk, Ethylen-Propylen-Dien-Kautschuk (EPDM), Polyurethan, Butylkautschuk, Urethangummi, Polyvinylazetat, Polyvinylchlorid und dergleichen. Idealerweise wird bei den Elastomerplatten ein Material mit einem Verlustfaktor von mindestens 0.1 gewählt. Vorzugsweise enthalten die plattenförmigen Transferelemente als Materialien Metalle, beispielsweise Aluminium, Stahl oder Titan, oder Faserverbundwerkstoffe, z.B. Carbon, Kevlar, Aramid und / oder Glasfaser.

Die jeweils eine Rotorblatthalterung querenden, plattenförmigen Transferelemente werden insofern gemäss der vorliegenden Erfindung als Bestandteil zweier benachbarter Dämpfungsvorrichtungen verstanden, indem die querenden, plattenförmigen Transferelemente zumindest abschnittsweise von den Dämpfungsvorrichtungen aufgenommen werden und mit anderen Worten in der Dämpfungsvorrichtung integriert sind. Durch die Integration der die Rotorblatthalterungen querenden, plattenförmigen Transferelemente in zwei benachbarten Dämpfungsvorrichtungen steht das querende, plattenförmige Transferelement in direkter Wirkverbindung mit den zwei benachbarten Dämpfungsvorrichtungen.

Bevorzugt sind die Kipplager im querenden Bereich der Rotorblatthalterungen, insbesondere linear in Umlaufrichtung der Rotorblätter und / oder entlang der Blattanstellwinkelachse wirkend, steifer ausgebildet als die zwischen den Rotorblatthalterungen angeordneten, als Plattendämpfer ausgebildeten Dämpfungsvorrichtungen. Im Sinne der vorliegenden Erfindung wird unter der Steifigkeit der als Plattendämpfer ausgestalteten Dämpfungsvorrichtung eine aus der Wahl dessen Komponenten in Kombination mit deren Geometrie beziehungsweise Form und der ausbildbaren Fixierung der Komponenten resultierende Steifigkeit verstanden.

Vorzugsweise ist die als Plattendämpfer ausgestaltete Dämpfungsvorrichtung der erfindungsgemässen Rotorblattkopplungsvorrichtung auf eine Steifigkeit zwischen 0.5 kN/mm bis 10 kN/mm, speziell bevorzugt zwischen 1 kN/mm bis 4 kN/mm, ausbildbar beziehungsweise ausgebildet. Mit anderen Worten ist die Steifigkeit durch Dämpfungsvorrichtung in Form eines Plattendämpfers in einfacher Weise spezifisch für den jeweiligen Anwendungsfall einstellbar und insbesondere sind die Eigenfrequenzen des Rotors einstellbar.

Besonders bevorzugt sind die Kipplager mindestens um das Dreifache, noch bevorzugter mindestens um das Fünffache, insbesondere linear in Umlaufrichtung der Rotorblätter und / oder entlang der Blattanstellwinkelachse wirkend, steifer ausgebildet als die zwischen den Rotorblatthalterungen angeordneten, als Plattendämpfer ausgebildeten Dämpfungsvorrichtungen. Je höher die Steifigkeit des Kipplagers gegenüber der Steifigkeit der Dämpfungsvorrichtung ausgebildet ist, umso verlustärmer werden Bewegungen der Rotorblatthalterungen an den geteilten Ring beziehungsweise die Ringanordnung der erfindungsgemässen Rotorblattkopplungsvorrichtung abgegeben. Ein weiterer Aspekt der vorliegenden Erfindung betrifft einen Rotorkopf umfassend eine erfindungsgemässe Rotorblattkopplungsvorrichtung zur Kopplung mit einem Rotormast.

Gemäss einer bevorzugten Weiterbildung der erfindungsgemässen Rotorblattkopplungsvorrichtung können die Kipplager aus einem Kipplagerbefestigungsbolzen und einem sphärischen Kipplagerkugelelement aufgebaut sein, wobei der Kipplagerbefestigungsbolzen gleichsam wie die Rotorblatthalterungen radial nach aussen im Wesentlichen in Richtung der Blattanstellwinkelachse verlaufend angeordnet sein.

Alternativ können gemäss einer weiteren bevorzugten Weiterbildung der erfindungsgemässen Rotorblattkopplungsvorrichtung die Kipplager senkrecht zur Ringebene des geteilten Ring beziehungsweise der Ringanordnung in jeweils ein Transferelement eingelassen sein.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben. Es zeigen:
- Fig. 1: eine perspektivische Ansicht einer bevorzugten Ausführungsform der erfindungsgemässen Rotorblattkopplungsvorrichtung;
- Fig. 2: eine Detailansicht der erfindungsgemässen Rotorblattkopplungsvorrichtung 2 mit einer vergrösserten Ansicht einer Dämpfungsvorrichtung D;
- Fig. 3: einen Schnitt entlang A-A in Fig. 1 durch eine Rotorblatthalterung der erfindungsgemässen Rotorblattkopplungsvorrichtung;
- Fig. 4: einen Schnitt entlang B-B in Fig. 1 zwischen einer Rotorblatthalterung, Kipplager und Transferelement der erfindungsgemässen Rotorblattkopplungsvorrichtung;
- Fig. 5: einen Schnitt entlang C-C in Fig. 1 durch eine als Plattendämpfer ausgebildete Dämpfungsvorrichtung D der erfindungsgemässen Rotorblattkopplungsvorrichtung;
- Fig. 6: eine perspektivische Ansicht einer weiteren bevorzugten Ausführungsform der erfindungsgemässen Rotorblattkopplungsvorrichtung;
- Fig. 7a: einen Längsschnitt entlang A'-A' in Fig. 6 durch eine Rotorblatthalterung der weiteren bevorzugten Ausführungsform der erfindungsgemässen Rotorblattkopplungsvorrichtung;
- Fig. 7b: einen Längsschnitt entlang A'-A' in Fig. 6 durch eine Rotorblatthalterung der weiteren bevorzugten Ausführungsform der erfindungsgemässen Rotorblattkopplungsvorrichtung mit radial ausgelenktem Kipplagerbefestigungsbolzen;
- Fig. 8a: einen Querschnitt entlang B'-B' in Fig. 6 durch eine Rotorblatthalterung der weiteren bevorzugten Ausführungsform der erfindungsgemässen Rotorblattkopplungsvorrichtung;
- Fig. 8b: einen Querschnitt entlang B'-B' in Fig. 6 durch eine Rotorblatthalterung der erfindungsgemässen Rotorblattkopplungsvorrichtung mit in Umlaufrichtung ausgelenktem Kipplagerbefestigungsbolzen.

### Beschreibung

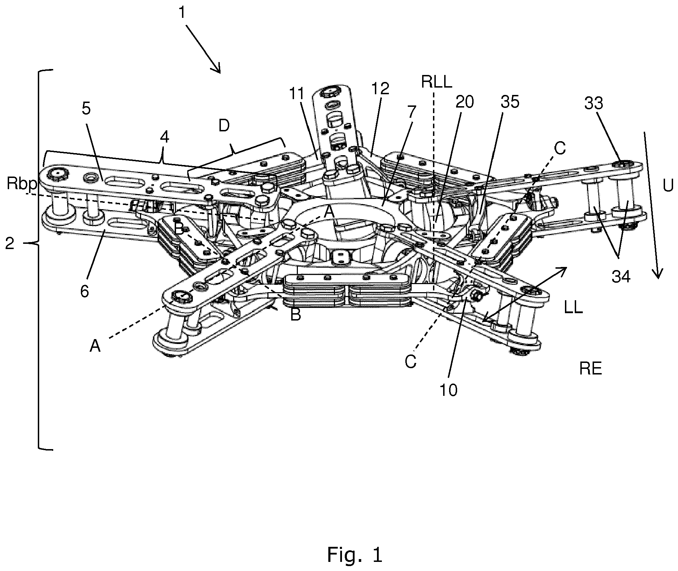

Fig. 1 zeigt eine perspektivische Ansicht von schräg oben einer bevorzugten Ausführungsform der erfindungsgemässen Rotorblattkopplungsvorrichtung 2 eines Rotorkopfs 1. Am Rotorkopf 1 sind mittels der erfindungsgemässen Rotorblattkopplungsvorrichtung 2 fünf, hier nicht dargestellten Rotorblätter befestigbar. Die Rotorblattkopplungsvorrichtung 2 umfasst ein Rotorkopfzentralstück 7 sowie fünf daran befestigte Rotorblatthalterungen 4 zur Aufnahme von fünf Rotorblättern. Das Rotorkopfzentralstück 7 ist drehfest gekoppelt mit einem Rotormast (nicht gezeigt in Fig.1), wobei der Rotormast mittels eines hier nicht gezeigten Antriebs in Rotation versetzbar ist und bei Rotation in einer Umlaufrichtung U die zum Fliegen notwendige Auftriebskraft bewirkt wird.

Die Rotorblatthalterungen 4 umfassen jeweils eine obere Rotorblatthalterungsplatte 5 und eine untere Rotorblatthalterungsplatte 6. Die Rotorblatthalterungsplatten 5 und 6 weisen in einem äusseren, radialen Bereich Öffnungen 33 zur Aufnahme von elastisch gelagerten Bolzen 34 auf zur Fixierung von Rotorblättern. Zudem ist in Fig. 1 eine Blattverstellstange 35 ersichtlich gekoppelt mit einer Rotorblatthalterung 4, wobei anhand der Blattverstellstange 35 eine gekoppelte Rotorblatthalterung 4 um eine Blattanstellwinkelachse Rbp (auch "blade-pitch"-Achse genannt) drehbar ist und dadurch der Blattanstellwinkel eines Rotorblatts gegenüber der anströmenden Luft einstellbar ist und der Drehflügler steigt oder sinkt (so genannter "blade pitch").

Im Weiteren weist das in Fig. 1 gezeigte, als Scheibe ausgestaltete Rotorkopfzentralstück 7 Durchbrüche 8 auf, wobei in den Durchbrüchen 8 jeweils ein elastomeres, sphärisches Lagerelement 20 angeordnet ist. Wie in Fig. 1 durch einen Doppelpfeil LL angedeutet erlauben die elastischen, sphärischen Lagerelemente 20 jeweils eine räumliche Schwenkbewegung LL um eine vertikal zur Rotorebene RE stehende Schwenkachse RLL im Zusammenhang mit den beschriebenen, in Abhängigkeit der Ausrichtung eines Rotorblatts 3 auftretenden lead-lag-Bewegungen. Die Schwenkbewegung LL kann in der Rotorebene RE in Umlaufrichtung U ("lead") oder entgegengesetzt zur Umlaufrichtung U ("lag") erfolgen.

Gemäss Fig.1 ist die Gesamtheit der die Rotorblatthalterungen 4 querenden Transferelemente 10 sowie Dämpfungsvorrichtungen D einen geteilten Ring beziehungsweise eine Ringanordnung, wobei - wie in Fig.1 ersichtlich - im mit dem Rotorkopf gekoppelten Zustand der erfindungsgemässen Rotorblattkopplungsvorrichtung keine direkte mechanische Wirkverbindung zwischen dem geteilten Ring und Rotormast besteht, so dass der geteilte Ring dank gelenkigen Verbindungen zwischen den oberen und unteren Rotorblatthalterungen 5; 6 vollständig kardanisch gelagert ist.

Von hier an und im Folgenden bezeichnen gleiche Referenzzeichen gleiche Komponenten in den Figuren.

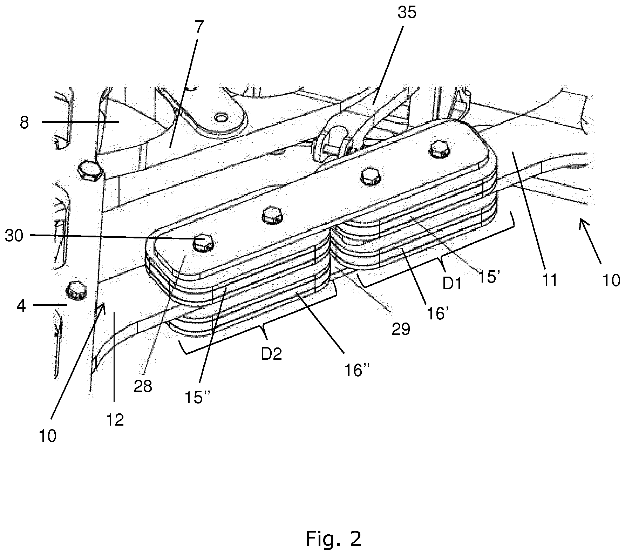

Fig. 2 zeigt eine Detailansicht der erfindungsgemässen Rotorblattkopplungsvorrichtung 2, nämlich eine vergrösserte Ansicht einer Dämpfungsvorrichtung D, die als so genannter "interblade"-Dämpfer zwischen zwei benachbarten Blatthalterungen 4 angeordnet und als Plattendämpfer ausgestaltet ist.

An einem ersten Arm 11 eines ein Ringsegment bildenden, plattenförmigen Transferelements 10 ist ein oberes Dämpfungselement 15' sowie ein unteres Dämpfungselement 16' angebracht und dadurch wirkverbunden in die Dämpfungsvorrichtung D integriert zur Bildung eines ersten Dämpfungsabschnitts D1. Im Weiteren ist an einem zweiten Arm 12 eines benachbarten, plattenförmigen Transferelements 10 einer benachbarten Rotorblatthalterung 4 ein oberes Dämpfungselement 15" sowie ein unteres Dämpfungselement 16" angebracht und dadurch wirkverbunden in die Dämpfungsvorrichtung integriert zur Bildung einer zweiten Dämpfungsabschnitts D2. Hierbei wird vorteilhaft die gelenkige Verbindung der benachbarten Ringsegmente bildenden, plattenförmigen Transferelemente 10 in die Dämpfungsvorrichtung D verlegt.

Wie im Weiteren im Fig. 2 ersichtlich weisen die Dämpfungselemente 15'; 15"; 16'; 16" jeweils eine zwischen zwei Platten 17 eingeschlossene Elastomerplatte 18 auf. Die Dämpfungselemente 15'; 15"; 16'; 16" können beispielsweise mittels Vulkanisation und / oder durch Verkleben miteinander fixiert sein. Die Platten 17 können beispielhaft aus Metallen wie Stahl, Aluminium oder Titan, oder Faserverbundwerkstoffen gefertigt sein.

Die Dämpfungsvorrichtung D umfasst eine obere Verbindungsplatte 28 sowie eine untere Verbindungsplatte 29, welche eine Verbindung herstellen zwischen dem ersten Dämpfungsabschnitt D1 und dem zweiten Dämpfungsabschnitt D2. Mittels Schrauben 30 werden die Verbindungsplatten 28; 29 sowie die weiteren Komponenten der Dämpfungsabschnitte D1; D2 miteinander fixiert und auf eine definierte Kompressionsverschiebung vorgespannt.

Gemäss einer alternativen Ausgestaltung der Dämpfungsvorrichtung D ist es denkbar, dass die Dämpfungselemente 15'; 15" mit der oberen Verbindungsplatte 28 beispielsweise mittels Vulkanisation fest fixiert ist und dadurch ein oberes, eine Einheit bildendes Dämpfungsbauteil ausbildet, wobei vorteilhaft auf der den Armen 11; 12 abgewandten Seite (d.h. zwischen Verbindungsplatte 28 und den Dämpfungselementen 15'; 15") auf eine Platte 17 verzichtet und dadurch Gewicht eingespart werden kann. In analoger Weise kann ein unteres, eine Einheit bildendes Dämpfungsbauteil durch eine feste Fixierung der Dämpfungselemente 16'; 16" mit der unteren Verbindungsplatte 29 ausgebildet sein. Beispielsweise mittels Verschraubung werden die oberen und unteren Dämpfungsbauteile mit den Armen 11; 12 miteinander fixiert.

Während des Betriebs des Rotorkopfs erfolgt in der in Fig. 2 gezeigten Dämpfungsvorrichtung D eine Relativbewegung zwischen erstem Arm 11 eines Transferelements 10 und den weiteren Komponenten im ersten Dämpfungsabschnitt D1 durch Scherung der Elastomerplatten 18 der Dämpfungselemente 15'; 16' beziehungsweise eine Relativbewegung zwischen dem zweiten Arm 12 eines weiteren Transferelements 10 und den weiteren Komponenten im zweiten Dämpfungsabschnitt D2 durch Scherung der Elastomerplatten 18 der Dämpfungselemente 15"; 16". Jedes Dämpfungselement 15'; 15"; 16'; 16" besteht sandwichartig aus jeweils zwei Platten 17 und einer dazwischen angeordneten Elastomerplatte 18, während die plattenförmigen Transferelemente 10 jeweils zwischen zwei Dämpfungselementen 15'; 15"; 16'; 16" liegen.

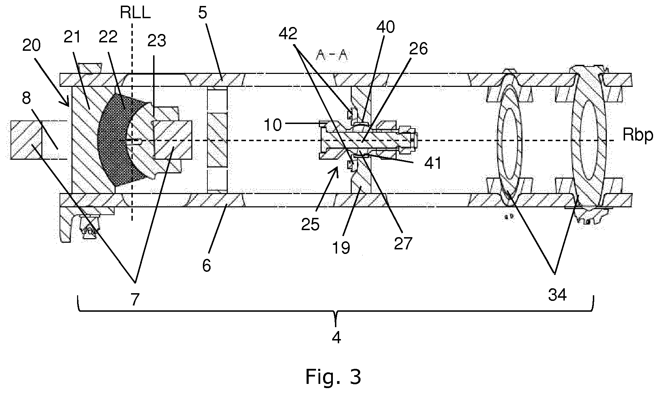

Im Weiteren zeigt Fig. 3 einen Schnitt entlang A-A in Fig. 1 durch eine Rotorblatthalterung 4 der erfindungsgemässen Rotorblattkopplungsvorrichtung mit einer oberen Rotorblatthalterungsplatte 5 und einer unteren Rotorblatthalterungsplatte 6. Wie in Fig. 3 ersichtlich ist im Bereich des Transferelements 10 ein Kipplager 25 angeordnet, welches aus einem Kipplagerbefestigungsbolzen 26 und einem sphärischen Kipplagerkugelelement 27 aufgebaut ist, wobei der Kipplagerbefestigungsbolzen 26 gleichsam wie die Rotorblatthalterungen 4 radial nach aussen im Wesentlichen in Richtung der Blattanstellwinkelachse Rbp verlaufend angeordnet sind, wobei eine solche Anordnung des Kipplagerbefestigungsbolzens 26 sich bei der Verdrehung der Blattanstellwinkelachse Rbp als besonders vorteilhaft erweist. Im Weiteren umfasst das Kipplager 25 ein Kipplagergehäuse 40, welches auf der dem Kipplagerkugelelement 27 zugewandten Seite eine zum Kipplagerkugelelement 27 korrespondierende Kugelform aufweist. Im Bereich zwischen Kipplagergehäuse 40 und dem Kipplagerkugelelement 27 ist eine Gleitschicht, beispielsweise eine Teflongleitschicht, oder Elastomerschicht 41 ausgebildet. Das Kipplager 25 ist in einem Abstandhalter 19 zwischen den Rotorblatthalterungsplatten 5; 6 angebracht und mittels Fixiermitteln 42 fixiert. Optional ist es denkbar, dass das Kipplagergehäuse 40 und der Abstandhalter 19 durch ein integrierte, einstückiges Bauteil ausgebildet ist, womit vorteilhaft der Installations- und Wartungsaufwand minimiert werden kann.

Ein elastomeres, sphärisches Lagerelement 20 ist in einem Durchbruch 8 des Rotorkopfzentralstücks 7 ersichtlich. Das elastomere, sphärisches Lagerelement 20 umfasst ein ausgebildetes Lagerbauteil 21, ein als Kugelsegment ausgestaltetes Lagerbauteil 22 sowie ein Lagerbauteil 23, welches das Rotorkopfzentralstück 7 abschnittsweise aufnimmt. Das Lagerbauteil 21 ist im Wesentlichen steif mit den Rotorblatthalterungsplatten 5; 6 verbunden. Im Weiteren handelt es sich beim Lagerbauteil 22 um ein geschichtetes Gummimetallelement, welches durch seine flexible Ausgestaltung die Schwenk-, Schlag- und Blattanstellwinkelverstellung erlaubt.

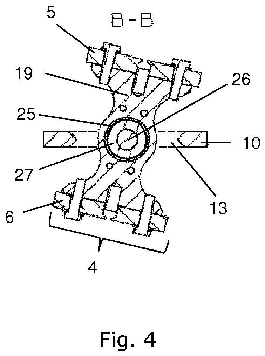

Fig. 4 einen Schnitt entlang B-B in Fig. 1 zwischen einer Rotorblatthalterung 4, Kipplager 25 und Transferelement 10 der erfindungsgemässen Rotorblattkopplungsvorrichtung 2 im Bereich einer Aussparung 13 des Transferelements 10. Wie in Fig. 4 ersichtlich ist das Kipplager 25 in einem Abstandshalter 19 zwischen der oberen Rotorblatthalterungsplatte 5 und der unteren Rotorblatthalterungsplatte 6 angeordnet, wodurch das Transferelement 10 zur Rotorblatthalterung 4 kippbar gelagert ist im Zusammenhang mit der "blade-pitch"-Einstellung. Das Kipplager 25 umfasst einen Kipplagerbefestigungsbolzen 26, welcher von einem äusseren Kipplagerkugelelement 27 umgeben ist, womit das Kipplager 25 als Kugelgelenklager ausgebildet ist. Das Kipplagerkugelelement 27 ist vorzugweise aus höherfesten Metallen wie beispielsweise Stahl oder Titan oder dergleichen gefertigt.

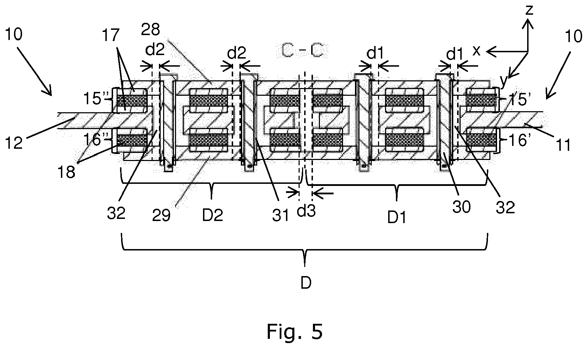

Im Weiteren zeigt Fig. 5 einen Schnitt entlang C-C in Fig. 1 durch eine als Plattendämpfer ausgebildete Dämpfungsvorrichtung D der erfindungsgemässen Rotorblattkopplungsvorrichtung.

Wie in Fig. 5 ersichtlich weist die Dämpfungsvorrichtung D vier durchgehende Bohrungen 32 auf. In jeweils einer Bohrung 32 ist eine Hülse 31 angeordnet, wobei durch die gewählte Länge der Hülse 32 die Vorspannung auf eine definierte Kompressionsverschiebung einstellbar ist. Mit anderen Worten werden die Komponenten der Dämpfungsvorrichtung D verschiebungsgesteuert auf die definierte Kompressionsverschiebung eingestellt.

Wie in Fig. 5 ersichtlich, sind Dämpfungselemente 15'; 15"; 16'; 16", welche jeweils eine zwischen zwei Platten 17 umschlossenes Elastomerplatte 18 umfassen, abschnittsweise in die Verbindungsplatten 28; 29 sowie gegenüberliegend in die Arme 11; 12 formschlüssig angeordnet. Durch eine derartige Anordnung der Dämpfungselemente 15'; 15"; 16'; 16" kann vorteilhaft eine Relativbewegung beispielsweise des Arms 11 des plattenförmigen Transferelements 10 in Richtung x gegenüber den weiteren Komponenten wie den Verbindungsplatten 28; 29 der Dämpfungsvorrichtung D gedämpft werden.

Eine von den lead-lag-Bewegungen eines Rotorblatts herrührende Relativbewegung beispielsweise des Arms 11 eines plattenförmigen Transferelements 10 in Richtung x wird mit anderen Worten mittels Scherung der Elastomerplatte 18 der Dämpfungselemente 15'; 16' über einen Dämpfungsabschnitt D1 gedämpft. Wie in Fig. 5 erkennbar, bestehen ein Zwischenräume d1 (Dämpfungsabschnitt D1) beziehungsweise d2 (Dämpfungsabschnitt D2) im Bereich der Durchführung der Schrauben 30 durch die Arme 11 beziehungsweise Arme 12 und dem Aussendurchmesser jeweils einer Hülse 31, wobei diese Zwischenräume d1; d2 maximale Verschiebungsdistanzen definieren. Im Weiteren ist zwischen dem ersten Arm 11 eines plattenförmigen Transferelements 10 und dem zweiten Arm 12 eines weitere plattenförmigen Transferelements 10 eine weitere Verschiebedistanz d3 definiert, wobei diese Verschiebedistanz d3 idealerweise ungefähr der Summe der Verschiebungsdistanzen d1 + d2 entspricht.

Die plattenförmigen Transferelemente 10, bzw. deren Arme 11; 12 können dank der Zwischenräume d1 und d2 in x,y-Richtung einerseits elastische Schubverformungen und dank der elastischen Verformbarkeit auf Druck in den Dämpfungselementen 15';16' und 15";16" auch gewisse Verformungen in z-Richtung Bewegungen aufgenommen werden.

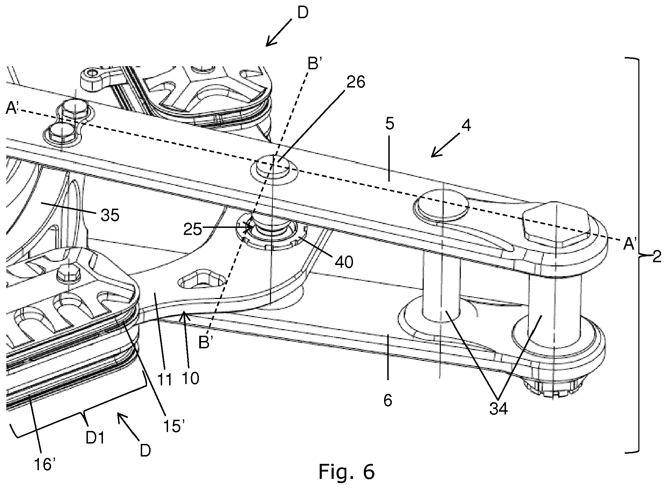

Fig. 6 zeigt eine perspektivische Ansicht einer weiteren bevorzugten Ausführungsform der erfindungsgemässen Rotorblattkopplungsvorrichtung 2, wobei das Kipplager 25 in jeweils ein Transferelement 10 senkrecht zur Ringebene des geteilten Ring beziehungsweise der Ringanordnung eingelassen ist.

An einem ersten Arm 11 eines ein Ringsegment bildenden, plattenförmigen Transferelements 10 ist ein oberes Dämpfungselement 15' sowie ein unteres Dämpfungselement 16' angebracht und dadurch wirkverbunden in die Dämpfungsvorrichtung D integriert zur Bildung eines ersten Dämpfungsabschnitts D1.

Das Kipplager 25 umfasst hier ein Kipplagergehäuse 40, welches auf der dem Kipplagerkugelelement 27 zugewandten Seite eine zum Kipplagerkugelelement 27 korrespondierende Kugelform aufweist. Das Kipplagergehäuse 40 ist hier in einer Aussparung des plattenförmigen Transferelements 10 aufgenommen und befestigt. Im Bereich zwischen Kipplagergehäuse 40 und dem Kipplagerkugelelement 27 ist eine Gleitschicht, beispielsweise eine Teflongleitschicht oder eine Gleitschicht aus Aluminiumbronze oder geeignete Kunststoffe, oder Elastomerschicht 41 ausgebildet, welche hier mit gehärtetem und polierten Stahl, Keramik oder Wolframcarbid in Verbindung stehen können.

Dabei erstreckt sich bei dieser Ausführungsform der Kipplagerbefestigungsbolzen 26 im Wesentlichen zwischen der oberen Rotorblatthalterungsplatte 5 und der unteren Rotorblatthalterungsplatte 6 der Rotorblatthalterung 4.

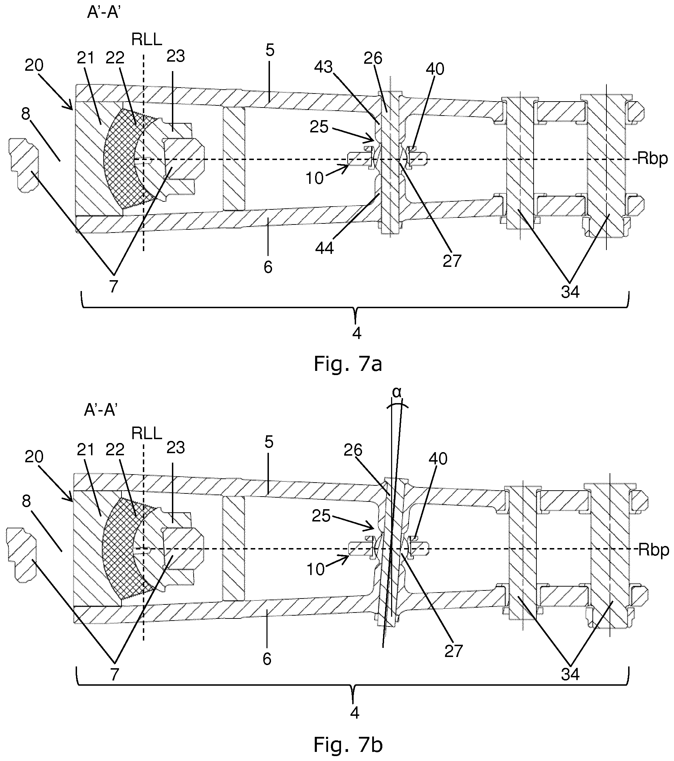

Fig. 7a zeigt einen Längsschnitt entlang A'-A' in Fig. 6 durch eine Rotorblatthalterung 4 der erfindungsgemässen Rotorblattkopplungsvorrichtung.

Das Rotorkopfzentralstück 7 weist hier Durchbrüche 8 auf, wobei in den Durchbrüchen 8 jeweils ein elastomeres, sphärisches Lagerelement 20 angeordnet ist. Das Lagerelement 20 umfasst hier ein ausgebildetes Lagerbauteil 21, ein als Kugelsegment ausgestaltetes Lagerbauteil 22 sowie ein Lagerbauteil 23, welches das Rotorkopfzentralstück 7 abschnittsweise aufnimmt.

Das Kipplager 25 umfasst einen Kipplagerbefestigungsbolzen 26, welcher von einem äusseren Kipplagerkugelelement 27 umgeben ist, womit das Kipplager 25 als Kugelgelenklager ausgebildet ist. Der sich zwischen der oberen Rotorblatthalterungsplatte 5 und der unteren Rotorblatthalterungsplatte 6 erstreckende Kipplagerbefestigungsbolzen 26 ist wie in Fig. 7a ersichtlich in einen oberen Führungszylinder 43 und einen unteren Führungszylinder 44 aufgenommen, wobei hier der obere Führungszylinder 43 an die obere Rotorblatthalterungsplatte 5 und der untere Führungszylinder 44 an die untere Rotorblatthalterungsplatte 6 angeformt sind. Alternativ ist es denkbar, die Führungszylinder 43; 44 als eigenständige Bauteile auszubilden und an die Rotorblatthalterungsplatten 5; 6 zu fixieren.

Wie in Fig. 7a ersichtlich ist im Bereich des Transferelements 10 das Kipplager 25 angeordnet, welches aus einem Kipplagerbefestigungsbolzen 26 und einem sphärischen Kipplagerkugelelement 27 aufgebaut ist, wobei der Kipplagerbefestigungsbolzen 26 im Ruhezustand beziehungsweise Nichtbetriebszustand des Rotors senkrecht zur Ringebene stehend beziehungsweise senkrecht zur Blattanstellwinkelachse Rbp stehend angeordnet beziehungsweise ausgerichtet ist. Zudem ist hier der Kipplagerbefestigungsbolzen 26 parallel zu einer Längsachse der Bolzen 34 verlaufend angeordnet.

Im diesem Zusammenhang zeigt Fig. 7b die Rotorblattkopplungsvorrichtung 2 im Betriebszustand des Rotors bei rotierenden Rotorblättern, wobei der Kipplagerbefestigungsbolzen 26 um einen Kippwinkel α bevorzugt von bis zu 20°, besonders bevorzugt bis zu 1° bis 5°, gekippt beziehungsweise ausgelenkt werden kann.

Fig. 7b zeigt hier beispielhaft eine radial nach aussen in Richtung der Blattanstellwinkelachse Rbp ausgelenkten Kipplagerbefestigungsbolzen 26 um einen Kippwinkel a.

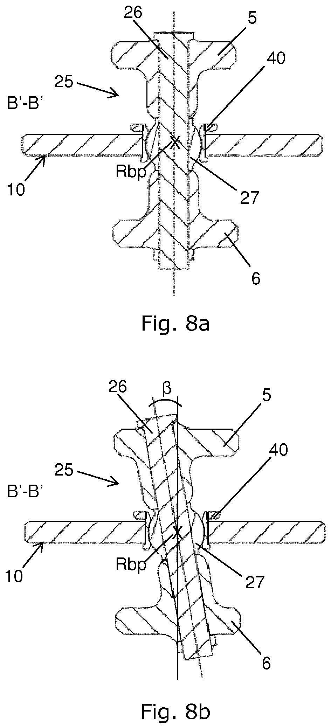

Im Weiteren zeigt Fig. 8a einen Querschnitt entlang B'-B' in Fig. 6 durch eine Rotorblatthalterung der weiteren Ausführungsform der erfindungsgemässen Rotorblattkopplungsvorrichtung.

Dabei ist hier der Kipplagerbefestigungsbolzen 26 im Ruhezustand beziehungsweise Nichtbetriebszustand des Rotors senkrecht zur Ringebene stehend angeordnet beziehungsweise ausgerichtet.

Fig. 8b zeigt hier beispielhaft einen in Umlaufrichtung der rotierenden Rotorblätter ausgelenkten Kipplagerbefestigungsbolzen 26. Dabei kann hier der Kipplagerbefestigungsbolzen 26 auch in diese Richtung um einen Kippwinkel β bevorzugt von bis zu 20°, besonders bevorzugt bis zu 5° bis 15°, um die Blattanstellwinkelachse Rbp gekippt beziehungsweise ausgelenkt werden.

Aufgrund der Ausgestaltung des Kipplagers 25 als Kugelgelenklager kann der Kipplagerbefestigungsbolzen 26 um alle Achsen, d.h. in jegliche Zwischenstellungen beziehungsweise Überlagerungen der in den Fig. 7b und 8b gezeigten Auslenkungen, um die Kippwinkel α und β gekippt beziehungsweise ausgelenkt werden.

Eine solche Anordnung und Ausrichtung des Kipplagerbefestigungsbolzens 26 des als Kugelgelenklager ausgebildeten Kipplagers 25 (wie in den Fig. 6 bis 8b gezeigt) gewährleistet vorteilhaft eine besonders gute Freigängigkeit und Kollisionsfreiheit. Typischerweise werden die Auslenkungen beziehungsweise Kippbewegungen des Kipplagerbefestigungsbolzens 26 durch den "blade-pitch" um eine Blattanstellwinkelachse Rbp, durch Schwenkbewegungen um die Schwenkachse RLL sowie durch Schlagbewegungen (auch als "flapping" bezeichnet) induziert.

### Bezugszeichenliste

- 1: Rotorkopf
- 2: Rotorblattkopplungsvorrichtung
- 4: Rotorblatthalterung
- 5: Obere Rotorblatthalterungsplatte
- 6: Untere Rotorblatthalterungsplatte
- 7: Rotorkopfzentralstück
- 8: Durchbruch
- 10: Transferelement
- 11: erster Arm
- 12: zweiter Arm
- 13: Aussparung
- 15'; 15": Oberes Dämpfungselement (des Plattendämpfers)
- 16'; 16": Unteres Dämpfungselement (des Plattendämpfers)
- 17: Platte (Dämpfelement)
- 18: Elastomerplatte (Dämpfelement)
- 19: Abstandhalter
- 20: Elastomeres, sphärisches Lagerelement
- 21: Lagerbauteil
- 22: Lagerbauteil
- 23: Lagerbauteil
- 25: Kipplager
- 26: Kipplagerbefestigungsbolzen
- 27: Kipplagerkugelelement
- 28: Obere Verbindungsplatte
- 29: Untere Verbindungsplatte
- 30: Schraube (des Plattendämpfers)
- 31: Hülse (des Plattendämpfers)
- 32: Bohrung (der Transferelemente)
- 33: Öffnungen (der Rotorblatthalterungen)
- 34: Bolzen (der Rotorblatthalterungen)
- 35: Blattverstellhebel
- 40: Kipplagergehäuse
- 41: Gleitschicht/Elastomerschicht (des Kipplagers)
- 42: Fixiermittel
- 43: Oberer Führungszylinder
- 44: Unterer Führungszylinder
- α: Kippwinkel
- D: Dämpfungsvorrichtung
- LL: Schwenkbewegung (lead-lag)
- RE: Rotorebene
- RLL: Schwenkachse
- Rbp: Blattanstellwinkelachse
- U: Umlaufrichtung (der Rotorblätter)

## Patentansprüche

1. Rotorblattkopplungsvorrichtung (2) zur Kopplung mit einem Rotormast zur Bildung eines Rotorkopfs (1) eines Drehflüglers, insbesondere einem Helikopter oder Hubschrauber, umfassend
- ein Rotorkopfzentralstück (7)
- mindestens drei am Rotorkopfzentralstück (7) befestigte Rotorblatthalterungen (4) zur Aufnahme von mindestens drei in einer Rotorebene (RE) liegenden Rotorblättern, sowie
- mindestens ein Verbindungsmittel zwischen benachbarten Rotorblatthalterungen (4),
wobei die Rotorblatthalterungen (4) jeweils um eine vertikal zur Rotorebene (RE) stehende Schwenkachse (RLL) schwenkbewegbar sind,
wobei das mindestens eine Verbindungsmittel durch eine Dämpfungsvorrichtung (D) ausgebildet ist, und
wobei die Rotorblattkopplungsvorrichtung (2) plattenförmige Transferelemente (10) umfasst, die jeweils eine Rotorblatthalterung (4) queren und mit mindestens einer Dämpfungsvorrichtung (D) gekoppelt sind,
**dadurch gekennzeichnet, dass** die Transferelemente (10) jeweils einen integrierten Bestandteil zweier benachbarter Dämpfungsvorrichtungen (D) bilden, indem die Transferelemente (10) zumindest abschnittsweise von den Dämpfungsvorrichtungen (D) aufgenommen sind, und dadurch in direkter Wirkverbindung mit den zwei benachbarten Dämpfungsvorrichtungen (D) stehen.

2. Rotorblattkopplungsvorrichtung (2) nach Patentanspruch 1,
**dadurch gekennzeichnet, dass**
die querenden, Transferelemente (10) zu den Rotorblatthalterungen (4) mittels eines Kipplagers (25) kippbar gelagert sind, beispielsweise mittels eines Gleitlagers, insbesondere Kugelgelenklagers mit einer Gleitschicht (41), und / oder mittels eines Elastomerlagers, insbesondere Kugelgelenklagers mit einer oder mehreren Elastomerschichten (41).

3. Rotorblattkopplungsvorrichtung (2) nach Patentanspruch 1 oder 2,
**dadurch gekennzeichnet, dass**
die Dämpfungsvorrichtung (D) als Plattendämpfer ausgebildet ist, wobei der Plattendämpfer zwei voneinander beabstandete, jeweils benachbarte Rotorblatthalterungen (4) querende, Transferelemente (10) umfasst und zumindest abschnittsweise aufnimmt.

4. Rotorblattkopplungsvorrichtung (2) nach Patentanspruch 3,
**dadurch gekennzeichnet, dass**
die Kipplager (25) im querenden Bereich der Rotorblatthalterungen (4), insbesondere linear in Umlaufrichtung der Rotorblätter und / oder entlang der Blattanstellwinkelachse (Rbp) wirkend, steifer ausgebildet sind als die zwischen den Rotorblatthalterungen (4) angeordneten, als Plattendämpfer ausgebildeten Dämpfungsvorrichtungen (D).

5. Rotorblattkopplungsvorrichtung (2) nach Patentanspruch 4,
**dadurch gekennzeichnet, dass**
die als Plattendämpfer ausgestaltete Dämpfungsvorrichtung (D) auf eine Steifigkeit zwischen 0.5 kN/mm bis 10 kN/mm, speziell bevorzugt zwischen 1 kN/mm bis 4 kN/mm, ausbildbar beziehungsweise ausgebildet ist.

6. Rotorblattkopplungsvorrichtung (2) nach Patentanspruch 4 oder 5,
**dadurch gekennzeichnet, dass**
das Kipplager (25) mindestens um das Dreifache, noch bevorzugter mindestens um das Fünffache, insbesondere linear in Umlaufrichtung der Rotorblätter und / oder entlang der Blattanstellwinkelachse (Rbp) wirkend, steifer ausgebildet ist als die zwischen den Rotorblatthalterungen (4) angeordneten, als Plattendämpfer ausgebildeten Dämpfungsvorrichtungen (D).

7. Rotorkopf (1) umfassend eine Rotorblattkopplungsvorrichtung (2) zur Kopplung mit einem Rotormast (9) nach einem der vorherigen Patentansprüche.

## Claims

1. A rotor blade coupling device (2) for purposes of coupling to a rotor mast so as to form a rotor head (1) of a rotorcraft, in particular a helicopter, comprising
- a rotor head central piece (7)
- at least three rotor blade mounts (4) attached to the rotor head central piece (7), for purposes of receiving at least three rotor blades located in a rotor plane (RE), as well as
- at least one means of connection between adjacent rotor blade mounts (4), wherein
the rotor blade mounts (4) can in each case be pivoted about a pivot axis (RLL), which stands vertically relative to the rotor plane (RE), wherein
the at least one means of connection is formed by a damping device (D), and wherein
the rotor blade coupling device (2) comprises plate-form transfer elements, which in each case cross a rotor blade mount (4) and are coupled to at least one damping device (D),
**characterised in that**,
the transfer elements (10) in each case form an integral component of two adjacent damping devices (D), **in that** at least sections of the transfer elements (10) are accommodated by the damping devices (D), and the transfer elements thereby stand in direct operative connection with the two adjacent damping devices (D).

2. The rotor blade coupling device (2) in accordance with patent claim 1,
**characterised in that**,
the crossing transfer elements (10) are mounted on the rotor blade mounts (4) such that they can tilt, by means of a tilting bearing (25), for example by means of a sliding bearing, in particular a ball joint bearing with a sliding layer (41), and/or by means of an elastomer bearing, in particular a ball joint bearing, with one or a plurality of elastomer layers (41) .

3. The rotor blade coupling device (2) in accordance with claim 1 or 2,
**characterised in that**,
the damping device (D) is formed as a plate damper, wherein
the plate damper comprises, and accommodates at least sections of, two transfer elements (10), spaced apart from one another, and in each case crossing adjacent rotor blade mounts (4).

4. The rotor blade coupling device (2) in accordance with patent claim 3,
**characterised in that**,
the tilting bearings (25) in the crossing region of the rotor blade mounts (4), in particular acting linearly in the direction of rotation of the rotor blades and/or along the blade pitch angle axis (Rbp), are of a more rigid design than the damping devices (D) arranged between the rotor blade mounts (4) and designed as plate dampers.

5. The rotor blade coupling device (2) in accordance with patent claim 4,
**characterised in that**,
the damping device (D), configured as a plate damper, can be, or is, designed to have a stiffness between 0.5 kN/mm and 10 kN/mm, in particular preferably between 1 kN/mm and 4 kN/mm.

6. The rotor blade coupling device (2) in accordance with claim 4 or 5,
**characterised in that**,
the tilting bearing (25), in particular acting linearly in the direction of rotation of the rotor blades, and/or along the blade pitch angle axis (Rbp), is designed to be at least three times more rigid, more preferably at least five times more rigid, than the damping devices (D) arranged between the rotor blade mounts (4) and designed as plate dampers.

7. A rotor head (1), comprising a rotor blade coupling device (2) for purposes of coupling to a rotor mast (9) in accordance with one of the preceding patent claims.

## Revendications

1. Dispositif de couplage de pales de rotor (2) pour le couplage à un mât de rotor pour former une tête de rotor (1) d'un giravion, en particulier d'un hélicoptère, comprenant
- une pièce centrale de tête de rotor (7),
- au moins trois fixations de pale de rotor (4) fixées sur la pièce centrale de tête de rotor (7) pour recevoir au moins trois pales de rotor reposant dans un plan de rotor (RE), ainsi
- qu'au moins un moyen de liaison entre des fixations de pale de rotor (4) adjacentes,
dans lequel les fixations de pale de rotor (4) sont mobiles en pivotement sur un pivot (RLL) vertical au plan de rotor (RE),
dans lequel l'au moins un moyen de liaison est formé par un dispositif d'amortissement (D), et
dans lequel le dispositif de couplage de pales de rotor (2) comprend des éléments de transfert en forme de plaques qui respectivement traversent une fixation de pale de rotor (4) et sont couplés à au moins un dispositif d'amortissement (D),
**caractérisé en ce que** les éléments de transfert (10) font respectivement partie intégrante de deux dispositifs d'amortissement (D) adjacents,
**en ce que** les éléments de transfert (10) sont reçus au moins par tronçons par les dispositifs d'amortissement (D) et en cela sont en relation active directe avec les deux dispositifs d'amortissement (D) adjacents.

2. Dispositif de couplage de pales de rotor (2) selon la revendication 1, **caractérisé en ce que** les éléments de transfert (10) traversants sont disposés en pouvant basculer par rapport aux fixations de pale de rotor (4) au moyen d'un appui oscillant (25), par exemple au moyen d'un palier lisse, en particulier d'un palier à rotule avec une couche lisse (41) et/ou au moyen d'un palier élastomère, en particulier d'un palier à rotule avec une ou plusieurs couche(s) élastomère (41).

3. Dispositif de couplage de pales de rotor (2) selon la revendication 1 ou 2, **caractérisé en ce que** le dispositif d'amortissement (D) est conçu en tant qu'amortisseur à plaques, dans lequel l'amortisseur à plaques comprend et reçoit au moins par tronçons deux éléments de transfert (10) distants l'un de l'autre, traversant respectivement des fixations de pale de rotor (4) adjacentes.

4. Dispositif de couplage de pales de rotor (2) selon la revendication 3, **caractérisé en ce que** les appuis oscillants (25) dans la partie transversale des fixations de pale de rotor (4), en particulier agissant de façon linéaire dans le sens périphérique des pales du rotor et/ou le long de l'axe d'angle d'incidence des pales (Rbp), sont construits plus rigides que les dispositifs d'amortissement (D) conçus en tant qu'amortisseurs à plaques disposés entre les fixations de pale de rotor (4).

5. Dispositif de couplage de pales de rotor (2) selon la revendication 4, **caractérisé en ce que** le dispositif d'amortissement (D) conçu en tant qu'amortisseur à plaques peut être formé, respectivement, est formé, à une rigidité entre 0,5 kN/mm à 10 kN/mm, particulièrement de préférence entre 1 kN/mm à 4 kN/mm.

6. Dispositif de couplage de pales de rotor (2) selon la revendication 4 ou 5, **caractérisé en ce que** l'appui oscillant (25) est construit au moins trois fois, plus encore de préférence au moins cinq fois plus rigide, en particulier agissant de façon linéaire dans le sens périphérique des pales du rotor et/ou le long de l'axe d'angle d'incidence des pales (Rbp) que les dispositifs d'amortissement (D) conçus en tant qu'amortisseurs à plaques disposés entre les fixations de pale de rotor (4) .

7. Tête de rotor (1) comprenant un dispositif de couplage de pales de rotor (2) pour le couplage à un mât de rotor (9) selon l'une des revendications précédentes.
